Europäisches Patentamt

European Patent Office

Office européen des brevets

(19)

(11)     EP 0 901 568 B1

## (12)     EUROPÄISCHE PATENTSCHRIFT

(45) Veröffentlichungstag und Bekanntmachung des Hinweises auf die Patenterteilung:
**19.09.2001   Patentblatt 2001/38**

(21) Anmeldenummer: **97924910.9**

(22) Anmeldetag: **22.05.1997**

(51) Int Cl.[7]: **F02C 7/16**

(86) Internationale Anmeldenummer:
**PCT/DE97/01043**

(87) Internationale Veröffentlichungsnummer:
**WO 97/45632 (04.12.1997 Gazette 1997/52)**

(54) **VERFAHREN ZUM BETREIBEN EINER GASTURBINE UND DANACH ARBEITENDE GASTURBINE**

METHOD OF OPERATING A GAS TURBINE, AND GAS TURBINE WORKING BY IT

PROCEDE POUR FAIRE FONCTIONNER UNE TURBINE A GAZ ET TURBINE A GAZ FONCTIONNANT SELON LEDIT PROCEDE

(84) Benannte Vertragsstaaten:
**DE FR GB**

(30) Priorität: **28.05.1996  DE 19621385**

(43) Veröffentlichungstag der Anmeldung:
**17.03.1999   Patentblatt 1999/11**

(73) Patentinhaber: **SIEMENS AKTIENGESELLSCHAFT 80333 München (DE)**

(72) Erfinder: **KAIL, Christoph D-91052 Erlangen (DE)**

(56) Entgegenhaltungen:
**US-A- 3 438 602        US-A- 3 739 581
US-A- 5 125 793        US-A- 5 207 053
US-A- 5 313 790        US-A- 5 590 518**

**Beschreibung**

Die Erfindung betrifft ein Verfahren zum Betreiben einer Gasturbine, deren Brennkammer verdichtete Luft und Brennstoff zugeführt wird, wobei ein der Gasturbine zugeführtes Kühlmittel aufgeheizt wird. Sie betrifft weiter eine nach diesem Verfahren arbeitende Gasturbine.

Beim Betrieb einer Gasturbine wird üblicherweise der Brennkammer verdichtete Luft als Verbrennungsluft zugeführt, die dort zusammen mit einem fossilen Brennstoff verbrannt wird. Das dabei erzeugte heiße Rauchgas wird in der Turbine arbeitsleistend entspannt. Zur Erreichung eines hohen Wirkungsgrades ist es aus dem Dokument "Gasturbinen", Fritz Dietzel, Vogel-Verlag, 1974, Seite 27 bis 28, bekannt, die verdichtete Luft durch indirekten Wärmeaustausch mit dem Abgas aus der Turbine aufzuheizen.

Desweiteren wird beim Betrieb einer Gasturbine diese gekühlt. Dazu ist es aus dem Dokument "Motortechnische Zeitschrift", 49 (1988), Seite 239 bis 240, bekannt, in einer Gasturbine mit offener Luftkühlung die verdichtete Kühlluft durch die Turbinenschaufeln zu führen. Dabei wird ein Teil der in einem Verdichter verdichteten Luft als Kühlluft verwendet, die dann in der Turbine aus den offenen Turbinenschaufeln austritt und dem Rauchgasstrom zugemischt wird. Infolge des Abströmens der Kühlluft aus Leit- und Laufschaufeln führt die offene Luftkühlung der Turbinenschaufeln zu einem Absenken der Temperatur der Rauchgase innerhalb und abströmseitig hinter der Turbine. Dadurch ist der Wirkungsgrad der Gasturbine nur begrenzt.

Aus der EP 670 418 A1 ist darüber hinaus ein Verfahren zur Kühlung eines Reformers bekannt, bei dem ein durch Methan-Reformierung erzeugtes Kühlmittel verwendet wird. Dabei reagieren die Ausgangsstoffe des Kühlmittels außerhalb der Turbine.

Ferner ist aus der US 5,125,793 ein Verfahren zur Kühlung einer Turbinenschaufel bekannt, bei dem als Kühlmittel Brennstoff verwendet wird, der endotherm reagiert und über Öffnungen in der Turbinenschaufel dem Arbeitsraum der Turbine zugeführt wird.

Der Erfindung liegt die Aufgabe zugrunde, ein Verfahren zum Betreiben einer Gasturbine anzugeben, mit dem ein besonders hoher Wirkungsgrad erzielt wird. Weiterhin soll eine zur Durchführung des Verfahrens besonders geeignete Gasturbine angegeben werden.

Bezüglich des Verfahrens wird diese Aufgabe erfindungsgemäß durch die Merkmale des Anspruchs 1 gelöst.

Als Kühlmittel wird eine Kohlenwasserstoff enthaltende erste Gemischkomponente und eine Wasser enthaltende zweite Gemisch-komponente verwendet. Innerhalb der Gasturbine, insbesondere in den Turbinenschaufeln, erfolgt dann eine endotherme Reaktion der Gemischkomponenten. Dabei nimmt das Kühlmittel Energie aus dem die Turbinenschaufeln umströmenden heißen Rauchgas auf. Das so in der Reaktion umgewandelte Kühlmittel, d.h. das Reaktionsprodukt, wird anschließend der Brennkammer zugeführt. Das Einbringen des umgewandelten und aufgeheizten Kühlmittels in die Brennkammer führt hier zu einer Freisetzung der chemisch eingebundenen Reaktionsenergie und der aufgenommenen Wärme während des Verbrennungsprozesses.

Die Erfindung geht dabei von der Überlegung aus, daß zur Erhöhung des Wirkungsgrades bei einer chemischen Reaktion speicherbare Energie genutzt werden kann. Dies kann dadurch erfolgen, daß als Kühlmittel ein Gemisch aus mindestens zwei Stoffen verwendet wird, wobei die Reaktionsstoffe endotherm reagieren. Die für die endotherme Reaktion benötigte Energie sollte an einer geeigneten Stelle besonders effektiv aufgenommen werden. Dies kann durch Aufnahme der Wärme des heißen Rauchgasstromes erfolgen. Die dabei aufgenommene Energie kann anschließend besonders effektiv während des Verbrennungsprozesses freigesetzt und somit in den Prozeß eingekoppelt werden.

Um einen besonders wirkungsvollen Einsatz des Kühlmittels in der Gasturbine zu erreichen, wird als erste Gemischkomponente Erdgas und als zweite Gemischkomponente Wasserdampf verwendet. Alle Teile, die nicht durch das Erdgas-Wasserdampf-Gemisch gekühlt werden, werden zweckmäßigerweise durch aus dem Verdichter entnommene Luft gekühlt. Dabei kann ein beliebiges Mengenverhältnis zwischen durch chemische Reaktion gebildetem Kühlmittel und aus dem Verdichter entnommenem Kühlmittel (Kühlluft) zur Kühlung der Gasturbine eingesetzt werden. Die luftgekühlten Teile können sowohl ein geschlossenes als auch ein offenes Kühlsystem aufweisen.

Das Kühlmittel durchströmt zweckmäßigerweise eine oder jede Turbinenschaufel, insbesondere die Leit- oder Lauf schaufeln, in einer Kühlschleife. Ferner durchströmt das Kühlmittel zusätzlich zu den Turbinenschaufeln auch die Turbinenwelle und/oder das Turbinengehäuse, vorzugsweise in einem geschlossenen Kanalsystem.

Um einen möglichst hohen Reaktionsumsatzgrad bei der chemischen Reaktion der ersten und der zweiten Gemischkomponente des Kühlmittels zu erreichen, wird ein Katalysator eingesetzt. Dabei wird als Katalysatormaterial vorzugsweise Nickel verwendet. Der Katalysator ist vorteilhafterweise Bestandteil der zu kühlenden Turbinenschaufel, z.B. in Form einer katalytischen Beschichtung des Innenraumes der Turbinenschaufel, insbesondere der Hohlräume.

Bezüglich der Gasturbine, die einen Verdichter, eine Brennkammer und eine Turbine sowie eine Kühlluftleitung zum Zuführen von Kühlluft in die Turbine und eine Frischluftleitung zum Zuführen von verdichteter Luft in die Brennkammer umfaßt, wird die genannte Aufgabe erfindungsgemäß dadurch gelöst, daß zur Erzeugung des Kühlmittels aus einer Kohlenwasserstoff enthaltenden ersten Gemischkomponente und einer Wasser enthaltenden zweiten Gemischkomponente eine Mischvorrichtung vorgesehen ist, die über eine Anzahl von Kühlmittelkanälen in die Turbine mündet, wobei ein Innenraum der Turbine mindestens teilweise katalytisch beschichtet ist.

Der Katalysator oder die katalytische Beschichtung zur Unterstützung der chemischen Reaktion der Gemischkomponenten kann auch Bestandteil der Mischvorrichtung sein.

Um jeder einzelnen Turbinenschaufelreihe separat Kühlmittel zuführen zu können, mündet jeder vorzugsweise als Kühlmittelleitung ausgebildete Kühlmittelkanal in eine Schaufelreihe der Turbine. Zweckmäßigerweise ist daher zum Abführen des aufgeheizten Kühlmittels eine der Anzahl der Kühlmittelkanäle oder -leitungen entsprechende Anzahl von Abgangsleitungen vorgesehen. Die Kühlmittelleitungen und die Kühlschleifen durch die Turbinenschaufeln sowie die Abgangsleitungen sind zweckmäßigerweise als ein geschlossenes Kanalsystem ausgeführt. Das Kanalsystem durchzieht somit nicht nur die Turbinenschaufeln, sondern vorzugsweise auch die Turbinenwelle und/oder das Turbinengehäuse.

Um das in der Turbine umgewandelte und aufgeheizte Kühlmittel in besonders einfacher Weise in die Brennkammer einbringen zu können, ist vorzugsweise an die Brennkammer eine Leitung für das aus der Turbine abströmende Kühlmittel angeschlossen.

Die mit der Erfindung erzielten Vorteile bestehen insbesondere darin, daß durch Zuführen von in der Turbine durch eine chemische Reaktion umgewandeltem und aufgeheiztem Kühlmittel in die Brennkammer einer Gasturbine die chemisch eingebundene Reaktionsenergie sowie aufgenommene Wärme des Kühlmittels in dem Verbrennungsprozeß freigesetzt werden. Dies bewirkt eine Verminderung des Brennstoffverbrauchs. Demzufolge wird der Wirkungsgrad der Gasturbine erhöht.

Ausführungsbeispiele der Erfindung werden anhand einer Zeichnung näher erläutert. Darin zeigen:

Figur 1     schematisch eine Gasturbine mit einer Mischvorrichtung zur Erzeugung von Kühlmittel und

Figur 2     mit Kühlkanälen versehene Leit- und Laufschaufeln einer Turbine gemäß Figur 1.

Einander entsprechende Teile sind in beiden Figuren mit denselben Bezugszeichen versehen.

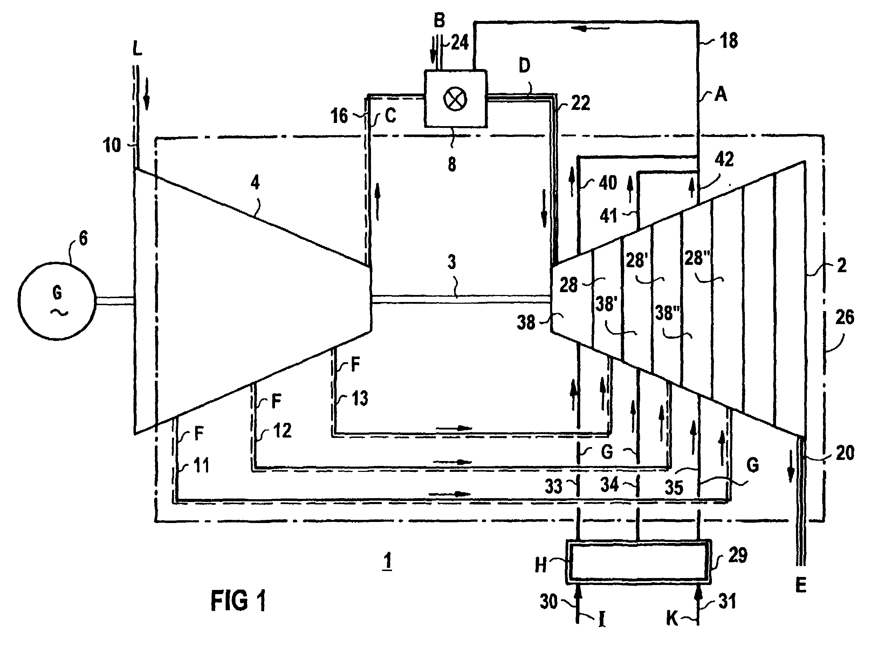

Die Gasturbine 1 gemäß Figur 1 umfaßt eine Turbine 2 mit über eine Turbinenwelle 3 angekoppeltem Luftverdichter 4 und Generator 6. Sie umfaßt weiter eine der Turbine 2 vorgeschaltete Brennkammer 8. Der Luftverdichter 4 weist saugseitig eine Ansaugleitung 10 und druckseitig eine Anzahl von Kühlluftleitungen 11, 12, 13 auf, die in die Turbine 2 münden. Der Luftverdichter 4 weist außerdem druckseitig eine Frischluftleitung 16 auf, die in die Brennkammer 8 mündet. An die Turbine 2 ist eine Leitung 18 für umgewandeltes und aufgeheiztes Kühlmittel A angeschlossen, die in die Brennkammer 8 mündet. Die Turbine 2 weist außerdem eine Abgasleitung 20 auf. Eine Rauchgasleitung 22 verbindet die Brennkammer 8 mit der Turbine 2.

Beim Betrieb der Gasturbine 1 wird der Brennkammer 8 über eine Brennstoffleitung 24 fossiler Brennstoff B, z.B. Erdgas oder Kohlegas, zugeführt. Darüber hinaus wird der Brennkammer 8 über die Leitung 18 das umgewandelte und aufgeheizte Kühlmittel A zugeführt. Der Brennstoff B wird in der Brennkammer 8 zusammen mit dem über die Leitung 18 zugeführten umgewandelten und aufgeheizten Kühlmittel A und mit über die Frischluftleitung 16 zugeführter verdichteter Luft oder Frischluft C verbrannt. Das bei der Verbrennung entstehende heiße Rauchgas oder Arbeitsmittel D wird über die Rauchgasleitung 22 in die Turbine 2 geleitet. Dort entspannt sich das Rauchgas D und treibt die Turbine 2 an. Diese wiederum treibt den Luftverdichter 4 und den Generator 6 an. Das Rauchgas D verläßt die Turbine 2 als Abgas E über die Abgasleitung 20 in Richtung auf einen (nicht dargestellten) Kamin. Das Abgas E kann auch zur Erzeugung von Dampf in einem Abhitzedampferzeuger einer Gas- und Dampfturbinenanlage genutzt werden. Eine derartige Gas- und Dampfturbinenanlage ist z.B. aus dem Europäischen Patent 0 410 111 B1 bekannt.

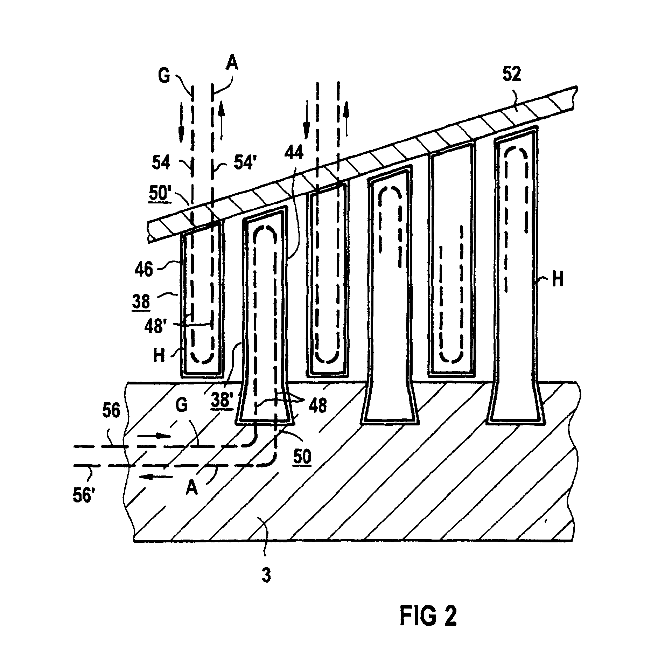

Das Rauchgas D weist bei Eintritt in die Turbine 2 eine hohe Temperatur von mehr als 1100 °C auf. Daher müssen Teile der Turbine 2, insbesondere die Turbinenschaufeln (Figur 2), gekühlt werden. Dabei erfolgt die Kühlung der Turbine 2 mittels Kühlmittel F, G in einem Kühlsystem 26, das im Ausführungsbeispiel zum Teil offen und zum Teil geschlossen ist.

Beim offenen Teil des Kühlsystems 26 wird ein Teil der verdichteten Luft auf der Druckseite des Luftverdichters 4 als Kühlmittel oder Kühlluft F entnommen. Die Kühlluft F wird der Turbine 2 über die Kühlluftleitungen 11, 12, 13 zugeführt. Jede Kühlluftleitung 11, 12, 13 mündet in eine Turbinenschaufelreihe 28, 28', 28''. Die Kühlluft F durchströmt die Turbinenschaufelreihen 28, 28', 28'' und wird dabei aufgeheizt. Die aufgeheizte Kühlluft tritt in nicht näher dargestellter Art und Weise aus Austrittsöffnungen der Turbinenschaufeln aus und wird innerhalb der Turbine 2 dem Strom des Rauchgases D zugeführt.

Beim geschlossenen Teil des Kühlsystem 26 wird ein Erdgas-Wasserdampf-Gemisch als Kühlmittel G verwendet, das in einer Mischvorrichtung 29 erzeugt wird. Dazu wird dieser Mischvorrichtung 29 über eine Leitung 30 Kohlenwasserstoff enthaltendes Erdgas I und über eine Leitung 31 Wasser enthaltender Wasserdampf K zugeführt. Zum Einbringen des Kühlmittels G in die Turbine 2 ist an die Mischvorrichtung 29 eine Anzahl von separaten Kühlmittelleitungen 33, 34, 35 angeschlossen. Jede Kühlmittelleitung 33, 34, 35 mündet in eine Turbinenschaufelreihe 38, 38', 38''.

Die Turbine 2 umfaßt eine Anzahl von Abgangsleitungen 40, 41, 42 für das aufgeheizte Kühlmittel A. Dabei ist jeder Kühlmittelleitung 33, 34, 35 eine von der entsprechenden Turbinenschaufelreihe 38, 38', 38'' separat abgehende Abgangsleitung 40, 41, 42 für das umgewandelte und aufgeheizte Kühlmittel A zugeordnet. Um das Kühlsystem 26 zu schließen, ist die oder jede Abgangsleitung 40, 41, 42 an die mit der Brennkammer 8 verbundene Leitung 18 für das umgewandelte und aufgeheizte Kühlmittel A angeschlossen.

Prinzipiell ist eine beliebige Kombination aus offenem Teil und geschlossenem Teil des Kühlsystems 26 sowie aus dem verwendeten Kühlmittel, nämlich Kühlluft F oder Kühlmittel G, möglich. Dabei können die Turbinenschaufelreihen 28, 28', 28'', 38, 38', 38'' in den offenen oder in den geschlossenen Teil des Kühlsystems 26 eingebunden sein. Für den offenen Teil des Kühlsystems 26 wird jedoch vorzugsweise nur die Kühlluft F verwendet. Dagegen wird für den geschlossenen Teil des Kühlsystems 26 entweder das Kühlmittel G oder es werden sowohl das Kühlmittel G als auch die Kühlluft F verwendet. Bei Verwendung der Kühlluft F in dem geschlossenen Teil des Kühlsystems 26 wird diese in nicht näher dargestellter Art und Weise als aufgeheizte Kühlluft vor oder direkt in den Verbrennungsprozeß geführt.

Figur 2 zeigt eine Laufschaufel 44 der Schaufelreihe 38' und eine Leitschaufel 46 der Schaufelreihe 38 der Turbine 2 mit Kühlkanälen 48, 48' einer Kühlschleife 50 bzw. 50'. Die Laufschaufel 44 sowie die Leitschaufel 46 werden mittels in der Kühlschleife 50 bzw. 50' geführtem Kühlmittel G gekühlt. In der Laufschaufel 44 und in der Leitschaufel 46 reagieren die Ausgangsstoffe des Kühlmittels G, nämlich Erdgas I als erste Gemischkomponente und Wasserdampf K als zweite Gemischkomponente, gemäß der Gleichung:

$$CH_4 + H_2O \rightarrow 3H_2 + CO$$

zu Wasserstoff und Kohlenmonoxid.

Bei dieser Umwandlung des Kühlmittels G wird Energie von etwa 206 kJ/mol aus dem heißen Rauchgas D aufgenommen. Darüber hinaus wird das umgewandelte Kühlmittel G durch indirekten Wärmeaustausch mit dem heißen Rauchgas D aufgeheizt, wobei das umgewandelte und aufgeheizte Kühlmittel AA entsteht.

Um einen möglichst hohen Reaktions- oder Umsatzgrad zu erreichen, wird ein Katalysator H eingesetzt, dessen Katalysatormaterial z.B. Nickel ist. Der Katalysator H ist als eine Beschichtung eines Reaktionsraumes, z.B. des Innenraumes der Laufschaufel 44 und der Leitschaufel 46, ausgeführt. Zusätzlich oder alternativ zur Beschichtung des Innenraumes der Laufschaufel 44 und der Leitschaufel 46 kann der Innenraum der Mischvorrichtung 29 mit Katalysatormaterial H beschichtet sein, vgl. Figur 1.

Das Kühlmittel G wird der Leitschaufel 46 durch einen im Turbinengehäuse 52 vorgesehenen Kanal 54 zugeführt, der in nicht näher dargestellter Art und Weise mit der entsprechenden Kühlmittelleitung 34 verbunden ist. Das umgewandelte und aufgeheizte Kühlmittel A der Leitschaufel 46 wird anschließend durch einen im Turbinengehäuse 52 vorgesehenen Kanal 54' abgeführt, der mit der entsprechenden Abgangsleitung 41 verbunden ist.

Analog wird der Laufschaufel 44 das Kühlmittel G durch einen in der Turbinenwelle 3 vorgesehenen Kanal 56 zugeführt, der mit der entsprechenden Kühlmittelleitung 33 verbunden ist. Das umgewandelte und aufgeheizte Kühlmittel A wird durch einen in der Turbinenwelle 3 vorgesehenen Kanal 56' abgeführt, der mit der entsprechenden Abgangsleitung 40 verbunden ist.

Der geschlossene Teil des Kühlsystems 26 umfaßt somit für die Laufschaufel 44 und die Leitschaufel 46 die das Kühlmittel G zuführenden Kanäle 56 bzw. 54, die Kühlkanäle 48 bzw. 48', die Kühlschleife 50 bzw. 50' sowie die das umgewandelte und aufgeheizte Kühlmittel A abführenden Kanäle 56' bzw. 54'.

Das in den Turbinenschaufeln 44, 46 umgewandelte und aufgeheizte Kühlmittel A wird anschließend zusammen mit dem Brennstoff B und der Frischluft C in der Brennkammer 8 verbrannt. Während des Verbrennungsprozesses werden die chemisch eingebundene Energie von etwa 206 kJ/mol und die aufgenommenen Wärme des umgewandelten und aufgeheizten Kühlmittels A besonders effektiv freigesetzt und somit in den Prozeß eingekoppelt. Dies bewirkt eine Verminderung des Brennstoffverbrauchs, und demzufolge wird der Wirkungsgrad der Gasturbinen 1 erhöht.

**Patentansprüche**

1. Verfahren zum Betreiben einer Gasturbine (1), deren Brennkammer (8) verdichtete Luft und Brennstoff zugeführt wird, wobei ein der Gasturbine (1) zugeführtes Kühlmittel das als erste Gemischkomponente Kohlenwasserstoff enthält, aufgeheizt wird,
   **dadurch gekennzeichnet, daß** als Kühlmittel die erste Gemischkomponente und eine Wasser enthaltende zweite Gemischkomponente verwendet wird, wobei die Gemischkomponenten in einem mindestens teilweise katalytisch beschichteten Innenraum der Gasturbine (1) endotherm reagieren, und wobei das umgewandelte und aufgeheizte Kühlmittel in die Brennkammer (8) geführt wird.

2. Verfahren nach Anspruch 1,
   **dadurch gekennzeichnet, daß** als erste Gemischkomponente Erdgas und als zweite Gemischkomponente Wasserdampf verwendet wird.

3. Verfahren nach Anspruch 1 oder 2,
   **dadurch gekennzeichnet, daß** zur Reaktion der beiden Gemischkomponenten ein Katalysator eingesetzt wird.

4. Verfahren nach Anspruch 3,
**dadurch gekennzeichnet, daß** als Katalysatormaterial Nickel verwendet wird.

5. Verfahren nach einem der Ansprüche 1 bis 4,
**dadurch gekennzeichnet, daß** das Kühlmittel eine oder jede Turbinenschaufel (44, 46) in einer Kühlschleife (48, 48') durchströmt.

6. Verfahren nach einem der Ansprüche 1 bis 5,
**dadurch gekennzeichnet, daß** das Kühlmittel die Turbinenwelle (3) und/oder das Turbinengehäuse (52) mindestens teilweise durchströmt.

7. Verfahren nach einem der Ansprüche 1 bis 6,
**dadurch gekennzeichnet, daß** als Kühlmittel ein Teil der verdichteten Luft verwendet wird.

8. Gasturbine (1) mit einer Brennkammer (8), einer Turbine (2) und einem Verdichter (4), einer Kühlluftleitung (11, 12, 13) zum Zuführen von Kühlluft und einer Kühlmittelleitung (33 bis 35) zum Zuführen von Kühlmittel, das als erste Gemisch-Komponente Kohlenwasserstoff enthält, sowie einer Frischluftleitung (16) zum Zuführen von verdichteter Luft in die Brennkammer (8),
**dadurch gekennzeichnet, daß** zur Erzeugung eines Kühlmittels aus der Kohlenwasserstoff enthaltenden ersten Gemischkomponente und einer Wasser enthaltenden zweiten Gemischkomponente eine Mischvorrichtung (29) vorgesehen ist, die über eine Anzahl von Kühlmittelkanälen (33, 34, 35) in die Turbine (2) mündet, wobei ein Innenraum der Turbine (2) mindestens teilweise katalytisch beschichtet ist, und wobei das in der Turbine (2) aufgeheizte Kühlmittel in die Brennkammer (8) führbar ist.

9. Gasturbine nach Anspruch 8,
**gekennzeichnet durch** eine an die Brennkammer (8) angeschlossene Leitung (18) für das aus der Turbine (2) abströmende aufgeheizte Kühlmittel.

10. Gasturbine nach Anspruch 8 oder 9,
**dadurch gekennzeichnet, daß** jeder Kühlmittelkanal (33, 34, 35) in eine Schaufelreihe (38, 38', 38") der Turbine (2) mündet.

11. Gasturbine nach einem der Ansprüche 8 bis 10,
**dadurch gekennzeichnet, daß** eine der Anzahl der Kühlmittelkanäle (33, 34, 35) entsprechende Anzahl von Abgangsleitungen (40, 41, 42) für das aufgeheizte Kühlmittel vorgesehen ist.

12. Gasturbine nach einem der Ansprüche 8 bis 11,

**dadurch gekennzeichnet, daß** für das Kühlmittel ein geschlossenes Kanalsystem (26) durch die Schaufelreihen (38, 38', 38") der Turbine (2) und/oder durch die Turbinenwelle (3) und/oder durch das Turbinengehäuse (52) vorgesehen ist.

13. Gasturbine nach einem der Ansprüche 8 bis 12, **gekennzeichnet durch** einen Katalysator im Innern der Mischvorrichtung und/oder einer oder jeder Turbinenschaufel (44, 46).

**Claims**

1. Method of operating a gas turbine, (1) the combustion chamber (8) of which is supplied with compressed air and fuel, a coolant which is supplied to the said gas turbine (1) and which contains hydrocarbon as a first mixture component being heated up,
**characterised in that,**
as the coolant, use is made of the first mixture component and of a second mixture component which contains water, the mixture components reacting endothermally in an interior space in the gas turbine (1), which interior space is at least partially catalytically coated, and the converted and heated-up coolant being conveyed into the combustion chamber (8).

2. Method according to claim 1,
**characterised in that** natural gas is used as the first mixture component, and steam as the second mixture component.

3. Method according to claim 1 or 2,
**characterised in that** a catalyst is employed for the reaction of the two mixture components.

4. Method according to claim 3,
**characterised in that** nickel is used as the catalyst material.

5. Method according to one of claims 1 to 4,
**characterised in that** the coolant flows through one turbine blade or every turbine blade (44, 46) in a cooling loop (48, 48').

6. Method according to one of claims 1 to 5,
**characterised in that**
the coolant flows, at least partially, through the turbine shaft (3) and/or the turbine casing (52).

7. Method according to one of claims 1 to 6,
**characterised in that**
some of the compressed air is used as coolant.

8. Gas turbine (1) having a combustion chamber (8), a turbine (2) and a compressor (4), a cooling-air line (11, 12, 13) for supplying cooling air and a coolant line (33 to 35) for supplying coolant which contains hydrocarbon as a first mixture component, as well as a fresh-air line (16) for supplying compressed air to the combustion chamber (8),
**characterised in that,** for the purpose of generating a coolant from the first mixture component containing hydrocarbon and a second mixture component containing water, a mixing device (29) is provided which opens into the turbine (2) via a number of coolant ducts (33, 34, 35), an interior space in the turbine (2) being at least partially catalytically coated, and the coolant heated up in the turbine (2) being capable of being conveyed into the combustion chamber (8).

9. Gas turbine according to claim 8,
**characterised by** a line (18) for the heated-up coolant flowing away from the turbine (2), which line (18) is connected to the combustion chamber (8).

10. Gas turbine according to claim 8 or 9,
**characterised in that** each coolant duct (33, 34, 35) opens into one blade row (38, 38', 38") of the turbine (2).

11. Gas turbine according to one of claims 8 to 10,
**characterised in that** a number of exit lines (40, 41, 42) which corresponds to the number of coolant ducts (33, 34, 35) is provided for the heated-up medium.

12. Gas turbine according to one of claims 8 to 11,
**characterised in that** a closed duct system (26) for the coolant is provided through the blade-rows (38, 38', 38") of the turbine (2) and/or through the turbine shaft (3) and/or through the turbine casing (52).

13. Gas turbine according to one of claims 8 to 12,
**characterised by** a catalyst in the interior of the mixing device and/or of one or every turbine blade (44, 46).

## Revendications

1. Procédé pour faire fonctionner une turbine (1) à gaz, à la chambre (8) de combustion de laquelle sont envoyés de l'air comprimé et du combustible, un fluide de refroidissement, envoyé à la turbine (1) à gaz et contenant un hydrocarbure comme premier constituant de mélange, étant réchauffé,
**caractérisé en ce qu'**il consiste à utiliser comme fluide de refroidissement le premier constituant de mélange et un deuxième constituant de mélange contenant de l'eau, les constituants de mélange réagissant de manière endothermique dans une chambre intérieure, revêtue au moins partiellement catalytiquement, de la turbine (1) à gaz, et l'agent de refroidissement, transformé et réchauffé, étant envoyé dans la chambre (8) de combustion.

2. Procédé suivant la revendication 1, **caractérisé en ce qu'**il consiste à utiliser comme premier constituant de mélange, du gaz naturel et comme deuxième constituant de mélange, de la vapeur d'eau.

3. Procédé suivant la revendication 1 ou 2, **caractérisé en ce qu'**il consiste à utiliser pour la réaction des deux constituants de mélange, un support catalytique.

4. Procédé suivant la revendication 3, **caractérisé en ce qu'**il consiste à utiliser du nickel comme matière de support catalytique.

5. Procédé suivant l'une des revendications 1 à 4, **caractérisé en ce que** l'agent de refroidissement passe dans une aube (44, 46) de turbine ou dans chaque aube (44, 46) de turbine, suivant une boucle (48, 48') de refroidissement.

6. Procédé suivant l'une des revendications 1 à 5, **caractérisé en ce que** le fluide de refroidissement passe au moins partiellement dans l'arbre (3) de la turbine et/ou dans l'enveloppe (52) de la turbine.

7. Procédé suivant l'une des revendications 1 à 5, **caractérisé en ce qu'**il consiste à utiliser comme fluide de refroidissement, une partie de l'air comprimé.

8. Turbine (1) à gaz ayant une chambre (8) de combustion, une turbine (2) et un compresseur (4), un conduit (11, 12, 13) pour de l'air de refroidissement, destiné à apporter de l'air de refroidissement et un conduit (33, 35) de fluide de refroidissement, destiné à apporter du fluide de refroidissement qui contient un hydrocarbure comme premier constituant de mélange, ainsi qu'un conduit (16) pour de l'air frais, destiné à apporter de l'air comprimé à la chambre (8) de combustion,
**caractérisée en ce que** pour la production d'un fluide de refroidissement, à partir du premier constituant de mélange contenant un hydrocarbure et d'un deuxième constituant de mélange contenant de l'eau, il est prévu un dispositif (29) de mélange qui débouche dans la turbine, par un certain nombre de canaux (33, 34, 35) pour du fluide de refroidissement, une chambre intérieure de la turbine étant revêtue catalytiquement au moins partiellement, et le fluide de refroidissement réchauffé dans la turbine (2), pouvant être envoyé dans la chambre (8) de combustion.

**9.** Turbine à gaz suivant la revendication 8, **caractérisée par** un conduit (18) communiquant avec la chambre (8) de combustion et destiné au fluide de refroidissement réchauffé qui sort de la turbine (2).

**10.** Turbine à gaz suivant la revendication 8 ou 9, **caractérisée en ce que** chaque canal (33, 34, 35) pour le fluide de refroidissement, débouche dans une rangée (38, 38', 38") d'aubes de la turbine (2).

**11.** Turbine à gaz suivant l'une des revendications 8 à 10, **caractérisée en ce qu'**il est prévu pour le fluide de refroidissement réchauffé, un nombre (40, 41, 42) de conduits de sortie, correspondant au nombre des canaux (33, 34, 35) pour le fluide de refroidissement.

**12.** Turbine à gaz suivant l'une des revendications 8 à 11, **caractérisée en ce qu'**il est prévu pour le fluide de refroidissement, un système (26) de canalisation fermé, passant dans les rangées (38, 38', 38") d'aubes de la turbine (2) et/ou, dans l'arbre (3) de la turbine et/ou, dans l'enveloppe (52) de la turbine.

**13.** Turbine à gaz suivant l'une des revendications 8 à 12, **caractérisée par** un support catalytique à l'intérieur du dispositif de mélange et/ou d'une aube (44, 46) de turbine, ou de chaque aube (44, 46) de turbine.

FIG 1

EP 0 901 568 B1

FIG 2